(19) Europäisches Patentamt
European Patent Office
Office européen des brevets

(11) Veröffentlichungsnummer: **0 192 127**
**A2**

(12) # EUROPÄISCHE PATENTANMELDUNG

(21) Anmeldenummer: 86101505.5

(22) Anmeldetag: 05.02.86

(51) Int. Cl.⁴: **A 01 N 25/22**
C 07 C 145/02, A 01 N 57/30
A 01 N 57/22, A 01 N 57/16
A 01 N 57/14, A 01 N 57/12
A 01 N 55/02, A 01 N 53/00
A 01 N 47/22, A 01 N 43/10

(30) Priorität: 14.02.85 US 701476

(43) Veröffentlichungstag der Anmeldung:
27.08.86 Patentblatt 86/35

(84) Benannte Vertragsstaaten:
BE DE FR GB IT NL

(71) Anmelder: BAYER AG
Konzernverwaltung RP Patentabteilung
D-5090 Leverkusen 1 Bayerwerk(DE)

(71) Anmelder: Mobay Chemical Corporation
Penn Lincoln Parkway West
Pittsburgh, Pennsylvania 15205(US)

(72) Erfinder: Anderson, John, Dr.
Zum Stadion 9
D-4018 Langenfeld(DE)

(72) Erfinder: Homeyer, Bernhard, Dr.
Obere Strasse 28
D-5090 Leverkusen 3(DE)

(72) Erfinder: Kühle, Engelbert, Dr.
von-Bodelschwingh-Strasse 42
D-5060 Bergisch Gladbach(DE)

(72) Erfinder: Scheinpflug, Hans, Dr.
Am Thelenhof 15
D-5090 Leverkusen 1(DE)

(72) Erfinder: Zeck, Walter M., Dr.
4645 Pebble Bay So.
Vero Beach, FL. 32963(US)

(72) Erfinder: Simonet, Donald E., Dr.
151 32rd Ave.
Vero Beach, FL 32960(US)

(74) Vertreter: Schumacher, Günter, Dr. et al,
c/o Bayer AG Konzernverwaltung RP Patentabteilung
D-5090 Leverkusen 1 Bayerwerk(DE)

(54) **Schädlingsbekämpfungsmittel.**

(57) Die vorliegende Erfindung betrifft die Verwendung der Sulfensäureamide der allgemeinen Formel (I)

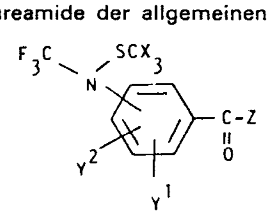

(I)

in welcher

X für gleiches oder verschiedenes Halogen steht,

$Y^1$ and $Y^2$ gleich oder verschieden sind und für Wasserstoff, Halogen, Alkyl, Alkoxy, Halogenalkyl oder $NO_2$ steht und

Z für Halogen, -OH, -NHOH, für die Gruppe $-OR^1$, in welcher $R^2$ gegebenenfalls substituierte Reste aus der Reihe Alkyl, Alkenyl, Alkinyl, Cycloalkyl, Aryl, Aralkyl oder Heterocyclyl bedeutet oder für die Gruppe

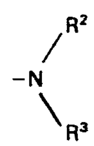

,

in welcher $R^2$ und $R^3$ gleich oder verschieden sind und Wasserstoff oder einen heterocyclischen Rest bedeuten oder für die Gruppe -OM, in welcher M Ammonium oder das Äquivalent eines Alkali-, Erdalkali- oder Schwermetall-Kations bedeutet steht, zur Verlängerung der Dauer einer hohen Wirksamkeit von Bodenschädlingsbekämpfungsmitteln.

EP 0 192 127 A2

0192127

S/Kü-c

## Schädlingsbekämpfungsmittel

Die vorliegende Erfindung betrifft neue Schädlingsbekämpfungsmittel, welche im Pflanzenschutz vorzugsweise zur Bekämpfung von Nematoden und Arthropoden, insbesondere Insekten verwendet werden können. Die neuen Schädlingsbekämpfungsmittel enthalten wenigstens einen geeigneten Wirkstoff aus der Reihe der Carbamate, der P-Ester (Phosphorsäureester und Phosphonsäureester, einschließlich der Esteramide sowie der jeweiligen Thiono-, Thiol- und Thiono-thiol-Derivate) und der Pyrethroide und wenigstens ein geeignetes Sulfensäureamid. Die neuen Schädlingsbekämpfungsmittel zeichnen sich durch eine besonders langdauernde Wirksamkeit bei der Verwendung als Nematizide und Bodeninsektizide aus.

Die Bekämpfung von Nematoden und Bodeninsekten gewinnt im intensiven Anbau von Nutzpflanzen immer mehr an Bedeutung. Als Bodeninsekten werden Insekten bezeichnet, welche ständig oder zeitweilig,

z.B. während bestimmter Entwicklungsstadien, im oder auf dem Boden oder in Bodennähe, z.B. an Pflanzenteilen leben (vgl. auch B. Homeyer in Chemie der Pflanzenschutz- und Schädlingsbekämpfungsmittel, herausgegeben von R. Wegler, Band 1, Springer-Verlag, Berlin 1970, Seiten 464 bis 474). Die Bekämpfung solcher Schädlinge sollte vorzugsweise präventiv erfolgen, so daß ein Bodenschädlingsbekämpfungsmittel frühzeitig appliziert werden muß und über einen möglichst langen Zeitraum eine sichere und ausreichende Wirksamkeit aufweisen muß. Häufig ist es zweckmäßig, die Schädlingsbekämpfungsmittel bereits mit der Aussaat zu applizieren, um gleichzeitig einen Schutz des Saatgutes und der sich entwickelnden jungen Pflanzen zu erzielen.

Da die derzeit verfügbaren Bodenbehandlungsmittel unter ungünstigen Witterungs- und/oder Bodenverhältnissen nicht immer mit Sicherheit eine ausreichend lange Wirksamkeit entfalten, galt es die Aufgabe zu lösen, neue Schädlingsbekämpfungsmittel verfügbar zu machen, welche, auch unter ungünstigen Bedingungen, einen langandauernden Schutz der Pflanzen ermöglichen.

Es wurde nun gefunden, daß Schädlingsbekämpfungsmittel, welche wenigstens einen gegen Nematoden und/oder Insekten, insbesondere Bodeninsekten, wirksamen Stoff, z.B.

Carbamate, P-Ester und Pyrethroide (im folgenden "Wirkstoff" genannt) und wenigstens ein Sulfensäureamid der allgemeinen Formel (I)

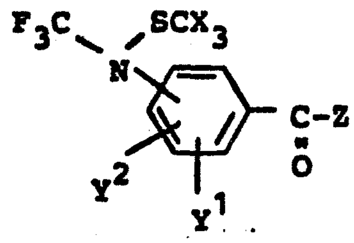

(I)

in welcher

X für gleiches oder verschiedenes Halogen steht,

$Y^1$ und $Y^2$ gleich oder verschieden sind und für Wasserstoff, Halogen, Alkyl, Alkoxy, Halogenalkyl oder $NO_2$ steht und

Z für Halogen, -OH, -NHOH, für die Gruppe $-OR^1$, in welcher $R^1$ gegebenenfalls substituierte Reste aus der Reihe Alkyl, Alkenyl, Alkinyl, Cycloalkyl, Aryl, Aralkyl oder Heterocyclyl bedeutet oder Z für die Gruppe 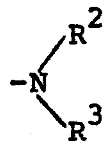 , in welcher $R^2$ und $R^3$ gleich oder verschieden sind und Wasserstoff oder gegebenenfalls substituierte Reste aus der Reihe Alkyl, Aryl oder einen heterocyclischen Rest bedeuten oder Z für die Gruppe -OM, in welcher M Ammonium oder das Äquivalent eines Alkali-, Erdalkali- oder Schwermetall-Kations bedeutet, steht

enthalten, eine besonders langanhaltende hohe Wirksamkeit gegen Nematoden oder Bodeninsekten aufweisen. Die Sulfensäureamide der allgemeinen Formel (I) werden im folgenden auch kurz als "Wirkungsverlängerer" oder "Extender" bezeichnet.

Die Wirkungsdauer der neuen Schädlingsbekämpfungsmittel ist erheblich länger als die Wirkungsdauer der Wirkstoffe. Da die Sulfensäureamide der allgemeinen Formel (I) in den angewandten Konzentrationen praktisch keine nematizide oder bodeninsektizide Wirksamkeit aufweisen, muß das Auftreten der Wirkungsverlängerung als ausgesprochen unerwartet und überraschend angesehen werden.

Bevorzugte Wirkstoffe für die neuen Schädlingsbekämpfungsmittel sind Carbamate, P-Ester (einschließlich der Esteramide, sowie der Thiono-, Thiol- und der Thionothiol-Derivate) und Pyrethroide, welche üblicherweise als Bodenschädlingsbekämpfungsmittel verwendet werden (vgl. Chemistry of Pesticides, edited by K.H. Büchel, John Wiley & Sons, New York, 1983, Farm Chemicals Handbook, Meister Publishing Co, Wolloughby, 1983, US-Patent Nr 4 127 652 und europäische Patentanmeldung 84 105 133.7 und entsprechende US-Patentanmeldung Nr. 06/606, 106).

Als P-Ester, Carbamate und Pyrethroide werden die im folgenden beschriebenen Wirkstoffe bevorzugt:

(A) P-Ester der allgemeinen Formel (II)

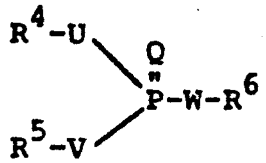

(II)

in welcher

Q für Sauerstoff oder Schwefel steht,

U, V und W gleich oder verschieden sind und für Sauerstoff oder Schwefel stehen, wobei einer der Reste U, V und W darüber hinaus auch eine direkte Bindung oder die -NH-Gruppe bedeuten kann,

$R^4$ und $R^5$ gleich oder verschieden sind und für $C_1$-$C_4$-Alkyl (vorzugsweise $C_1$-$C_3$-Alkyl) stehen, und

$R^6$ für $C_1$-$C_5$-Alkyl (vorzugsweise $C_1$-$C_2$-Alkyl) steht, welches durch $C_1$-$C_4$-Alkylthio (vorzugsweise $C_1$-$C_2$-Alkylthio) und/oder Halogen (vorzugsweise Chlor) substituiert sein kann, oder für $C_2$-$C_4$-Alkenyl steht, welches durch Halogen (vorzugsweise Chlor) und/oder Halogenphenyl (vorzugsweise Chlorphenyl) substituiert sein kann, oder für Phenyl steht, welches durch Halogen (vorzugsweise Chlor und/oder Brom), $C_1$-$C_4$-Alkyl (vorzugsweise Methyl), $C_1$-$C_4$-Alkylthio

(vorzugsweise Methylthio), $C_1$-$C_4$-Alkylsulfinyl (vorzugsweise Methylsulfinyl) und/oder $C_1$-$C_4$-Alkoxycarbonyl (vorzugsweise Propoxycarbonyl) substituiert sein kann, oder für Pyridyl steht, welches durch Halogen (vorzugsweise Chlor) substituiert sein kann, oder für Pyrimidinyl steht, welches durch $C_1$-$C_4$-Alkyl, $C_3$-$C_6$-Cycloalkyl und/oder Phenyl substituiert sein kann, für den Rest 5-Chlor-1-(1-methylethyl)-1H-1,2,4-triazol-3-yl steht, oder für die Gruppe $-N=CR^7(CN)$ steht, wobei $R^7$ gegebenenfalls durch Halogen (vorzugsweise Chlor) substituiertes Phenyl bedeutet.

In Formel II stehen $R^4$ und $R^5$ vorzugsweise für Methyl, Ethyl oder n- und i-Propyl.

$R^6$ steht vorzugsweise für Chlormethyl, Propyl, Ethylthiomethyl, Ethylthioethyl, t-Butylthiomethyl, 1-(2,4-Dichlorphenyl)-2-chlor-ethen-1-yl, Phenyl, 3-Methyl-4-Methylthio-phenyl, 4-Methylsulfinylphenyl, 2-i-Propoxycarbonylphenyl, 2,4-Dichlorphenyl, 2,4,5-Trichlorphenyl, 2,5-Dichlor-4-bromphenyl, 3,5,6-Trichlor-2-pyridyl, den Rest -N=(CN)(Phenyl) sowie den Rest 5-Chlor-1-(1-methylethyl)-1-H-1,2,4-triazol-3-yl.

Folgende P-Ester seien beispielhaft aufgeführt (common name oder chemische Bezeichnung):

Disulfoton, Fenamiphos, Isofenfos, Trichloronat, Fensulfothion, Protiofos, Phoxim, Chlorfenvinfos, Bromophos, Terbufos, Chlorpyrifos, Chlormephos, Fenofos, Isazophos, Ethoprofos, Phorate, O-Ethyl-O-i-propyl-O-(2-t-butyl-pyrimidin-5-yl)-thionophosphat und O,O-Diethyl-O-(2-t-butyl-pyrimidin-5-yl)-thionophosphat. Bevorzugt seien genannt: Terbufos, Chlorpyrifos, Fenofos, Isofenfos, Fenaminphos, Phorate, O-Ethyl-O-i-propyl-O-(2-t-butyl-pyrimidin-5-yl)-thionophosphat und 0,0-Diethyl-0-(2-t-butyl-pyrimidin-5-yl)-thionophosphat.

(B) Carbamate der allgemeinen Formel (III)

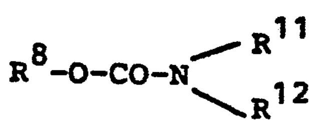

(III)

in welcher

$R^8$ für Phenyl steht, welches durch $C_1$-$C_4$-Alkylthio-$C_1$-$C_4$-alkyl (vorzugsweise Ethylthiomethyl), $C_1$-$C_4$-Alkyl (vorzugsweise Methyl), $C_1$-$C_4$-Alkoxy und/oder $C_1$-$C_4$-Alkylthio (vorzugsweise Methylthio) substituiert sein kann, oder für den Rest 2,3-Dihydro-2,2-dimethyl-7-benzofuranyl steht, oder für den Rest $-N{=}CR^9R^{10}$ steht, in welchem $R^9$ $C_1$-$C_4$-Alkyl (vorzugsweise Propyl) bedeutet, welches durch $C_1$-$C_4$-Alkylthio (vorzugsweise Methylthio) substituiert sein kann oder $R^9$ den Rest CON $(C_1$-$C_4$-Alkyl$)_2$ vorzugsweise $CONH(CH_3)_2$) bedeutet und $R^{10}$ Wasserstoff oder $C_1$-$C_4$-Alkylthio (vorzugsweise Methylthio) bedeutet,

$R^{11}$ für $C_1$-$C_4$-Alkyl (vorzugsweise Methyl) steht, und

$R^{12}$ für Wasserstoff oder für den Rest $-S-NR^{13}R^{14}$ steht, in welchem $R^{13}$ $C_1$-$C_4$-Alkyl bedeutet und $R^{14}$ $COOC_1$-$C_4$-Alkyl (vorzugsweise n-Butyl) oder $C_1$-$C_4$-Alkyl, welches durch COO-$C_1$-$C_4$-Alkyl (vorzugsweise $COOC_2H_5$) substituiert sein kann, bedeutet,

$R^8$ steht vorzugsweise für 3,4,5-Trimethylphenyl, 2-Ethylthiomethylphenyl, 3,5-Dimethyl-4-methylthiophenyl, 2,3-dihydro-2,2-dimethyl-7-benzofuranyl, $-N=CH-C(CH_3)_2(SCH_3)$, $-N=C(SCH_3)(CON(CH_3)_2)$ oder 2-i-Propoxyphenyl.

$R^{11}$ steht vorzugsweise für Methyl.

$R^{12}$ steht vorzugsweise für Wasserstoff, $-S-N(CH_3)(COOC_4H_9n)$, $-S-N(C_4H_9n)_2$ oder $-S-N(iC_3H_7)(CH_2CH_2COOC_2H_5)$.

Folgende Carbamate seien beispielhaft aufgeführt (common name bzw. chemische Bezeichnung): Ethiofencarb, Carbofuran, Methiocarb, Furatiocarb, Carbosulfan, Aminosulfuram, Aldicarb, Oxamyl und 3,4,5-Trimethylphenylcarbamat. Bevorzugt seien genannt: Carbofuran, Furatiocarb, Carbosulfan, Aminosulfuram und Aldicarb.

(C) Pyrethroide der allgemeinen Formel (IV)

$$R^{15}-\underset{\underset{R^{16}}{|}}{COOCH}-R^{17} \qquad (IV)$$

in welcher

$R^{15}$ für die Gruppe 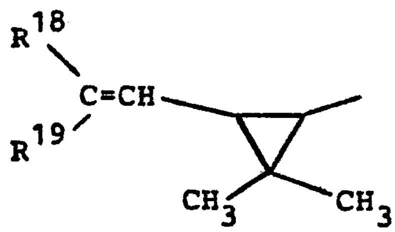 steht,

in welcher

$R^{18}$ Halogen (vorzugsweise Chlor oder Brom) oder $C_1$-$C_4$-Alkyl (vorzugsweise Methyl) bedeutet und

$R^{19}$ Halogen (vorzugsweise Chlor oder Brom), $C_1$-$C_4$-Alkyl (vorzugsweise Methyl) oder Phenyl, welches durch Halogen (vorzugsweise Chlor) substituiert sein kann, bedeutet, oder

$R^{15}$ für die Gruppe $R^{20}-\underset{\underset{C(CH_3)_2}{|}}{CH}-$ steht,

in welcher

$R^{20}$ Phenyl bedeutet, welches durch Halogen (vorzugsweise Chlor), $C_1$-$C_4$-Halogenalkyl (Halogen ist vorzugsweise Chlor oder Fluor), $C_1$-$C_4$-Halogenalkoxy (Halogen ist vorzugsweise Chlor oder Fluor) und/oder $C_1$-$C_4$-Alkoxy substituiert sein kann,

$R^{16}$ für Wasserstoff oder Cyano steht und

$R^{17}$ für Phenyl steht, welches durch Halogen (vorzugsweise Fluor oder Chlor) und/oder Phenoxy substituiert sein kann.

In den Gruppen $R^{15}$ stehen $R^{18}$ und $R^{19}$ vorzugsweise für Chlor, Brom oder Methyl oder $R^{18}$ steht für Chlor und $R^{19}$ steht für 4-Chlorphenyl. $R^{20}$ steht vorzugsweise für 4-Chlorphenyl oder für 2-Chlor-4-trifluormethylphenyl.

$R^{17}$ steht vorzugsweise für Pentafluorphenyl, 3-Phenoxyphenyl oder 4-Fluor-3-phenoxyphenyl.

Als Pyrethroide seien beispielhaft aufgeführt (common name): Phenothrin, Permethrin, Dekamethrin, Fenvalerate, Fluvalinate, Cyfluthrine und Fenfluthrin.

Die vorliegende Erfindung betrifft somit die neue Verwendung der Sulfensäureamide der allgemeinen Formel (I) als Mittel zur Wirkungsverlängerung bei

nematiziden und insektiziden Carbamaten, P-Estern und Pyrethroiden, Schädlingsbekämpfungsmittel, welche wenigstens eine Verbindung der Formel (I) und wenigstens einen nematiziden oder insektiziden Wirkstoff aus der Reihe der Carbamate P-Ester oder Pyrethroide enthalten sowie die Verwendung dieser Schädlingsbekämpfungsmittel zur Bekämpfung von Bodenschädlingen, vorzugsweise von Nematoden und Insekten. Der Einfachheit halber soll der Begriff Insekten jeweils auch die weniger bedeutsamen, als Bodenschädlinge auftretenden, Arthropoden einschließen, z.B. Ameisen, Springschwänze, Tausendfüßler, Termiten, Asseln und Wurzelmilben.

Teil der vorliegenden Erfindung sind auch die neuen Sulfensäureamide der allgemeinen Formel (I), in welcher X, $Y^1$ und $Y^2$ die oben angegebene Bedeutung haben und Z für die Gruppe-OM steht, wobei M Ammonium oder das Äquivalent eines Alkali-, Erdalkali- oder Schwermetall-Kations bedeutet, sowie ein Verfahren zur Herstellung dieser Salze.

Teil der vorliegenden Erfindung sind auch die neuen Sulfensäureamide der allgemeinen Formel (I), in welcher X, $Y^1$ und $Y^2$ die oben angegebene Bedeutung haben und Z für die Gruppe $OR^1$ steht, in welcher $R^1$ gegebenenfalls durch Halogen, Cyano, Alkylthio, Alkoxy oder Alkoxyalkoxy substituiertes Alkyl, Alkenyl oder Alkinyl bedeutet, sowie ein Verfahren zur Herstellung dieser Verbindungen.

Die übrigen Verbindungen der allgemeinen Formel (I) sind bekannt oder nach allgemein bekannten Methoden erhältlich (vgl. z.B. DE-A- 1 810 580, DE-A- 1 543 614 (entsprechend US-PS 3 597 480 und US-PS 3 723 628), DE-B- 1 293 754 und DE-A- 1 668 026 (entsprechend US-PS 3 547 992), DE-A- 1 919 180 (entsprechend US-PS 3 636 076), DE-A- 2 257 345 und DE-A- 2 311 983).

Die neuen Salze (Z = OM) können nach den allgemein üblichen Salzbildungsmethoden aus den Säuren (Z = -OH) durch die Umsetzung mit Ammoniak, Aminen oder Metallbasen, wie Hydroxiden, Carbonaten und Hydrogencarbonaten erhalten werden. Vorzugsweise arbeitet man bei 0 bis 30°C in wässrig-alkoholischer Lösung, wobei als Lösungsmittel niedere Alkohole, wie Methanol oder Ethanol verwendet werden können.

Die Reaktanden werden vorzugsweise in äquimolaren (bzw. äquivalenten) Mengen eingesetzt. Schwermetallsalze können zweckmäßigerweise aus den Alkalisalzen in wäßrig-alkoholischen Lösungen (Methanol, Ethanol) durch die Umsetzung mit Schwermetallsalzen (z.B. den Chloriden oder Sulfaten) erhalten werden, wobei die Schwermetallsalze aus der Lösung kristallin ausfallen und leicht isoliert werden können.

Die neuen Verbindungen der allgemeinen Formel (I), in welcher

X für gleiches oder verschiedenes Halogen steht,

$Y^1$ und $Y^2$ gleich oder verschieden sind und für Wasserstoff, Halogen, Alkyl, Alkoxy, Halogenalkyl oder $NO_2$ steht, und

Z für die Gruppe $-OR^1$ steht, in welcher

$R^1$ gegebenenfalls durch Halogen, Cyano, Alkoxy, Alkylthio oder Alkoxyalkoxy substituiertes Alkyl, Alkenyl oder Alkinyl bedeutet,

können dadurch erhalten werden, daß man die Verbindungen der allgemeinen Formel (V)

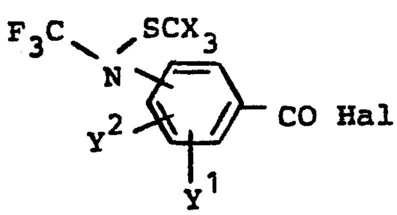

(V)

in welcher

X, $Y^1$ und $Y^2$ die oben angegebene Bedeutung haben und

Hal für Halogen (vorzugsweise Fluor oder Chlor) steht,

mit Verbindungen der allgemeinen Formel (VI)

$$R^1 - OH \qquad (VI)$$

in welcher

$R^1$ die oben angegebene Bedeutung hat,

in Gegenwart eines Säurebindemittels und in Gegenwart eines Lösungsmittels umsetzt.

Als Lösungsmittel kommen hierbei alle inerten organischen Lösungsmittel infrage. Hierzu gehören Ether, wie Diethylether, Tetrahydrofuran und Dioxan, Kohlenwasserstoffe, wie Benzol und Chlorkohlenwasserstoffe wie Chloroform und Chlorbenzol.

Zur Bindung des bei der Reaktion entstehenden Halogenwasserstoffes setzt man dem Reaktionsgemisch eine tert. Base wie Triethylamin oder aber anorganische Basen wie Alkalihydroxide oder -carbonate zu. Man kann auch direkt von Alkalialkoholaten bzw. -phenolaten ausgehen und die erfindungsgemäße Umsetzung in wäßriger Phase durchführen.

Die Reaktionstemperaturen können in einem größeren Bereich variiert werden, im allgemeinen arbeitet man zwischen 0° und 100°C, vorzugsweise zwischen 20 und 60°C.

Bei der Durchführung des Verfahren arbeitet man im allgemeinen in molaren Mengen. In vielen Fällen hat es sich aber als vorteilhaft gezeigt, wenn man die Hydroxyverbindung in geringem Überschuß (etwa 5-25 Gew.-%) einsetzt.

Die Aufarbeitung des Reaktionsgemisches erfolgt in üblicher Weise. Die erfindungsgemäßen Verbindungen stellen

entweder farblose Kristallisate oder Öle dar, die je nach Molekulargewicht häufig destilliert werden können.

In den allgemeinen Formeln (I) und (V) bedeutet X vorzugsweise Fluor oder Chlor, $X_3$ steht bevorzugt für die Reste $ClF_2$ oder $Cl_2F$, ganz besonders bevorzugt für $Cl_2F$.

Halogen in den Definition von $Y^1$, $Y^2$ und Z bedeutet Fluor, Chlor, Brom und Jod, vorzugsweise Fluor, Chlor und Brom und bei $Y^1$ und $Y^2$ besonders bevorzugt Chlor und bei Z besonders bevorzugt Fluor.

Alkyl und Alkoxy in der Definition von $Y^1$ und $Y^2$ enthalten vorzugsweise 1 bis 4 Kohlenstoffatome, wobei Methyl, Ethyl, n- und i-Propyl sowie Methoxy, Ethoxy, n- und i-Propoxy beispielhaft genannt sein. Besonders bevorzugt werden Methyl und Methoxy.

Halogenalkyl $Y^1$ und $Y^2$ enthält vorzugsweise 1 bis 4 Kohlenstoffatome und 1 bis 5 gleiche oder verschiedene Halogenatome (vorzugsweise Fluor und Chlor, insbesondere Fluor), wobei beispielhaft Trifluormethyl, Dichlorfluormethyl und Pentafluorethyl genannt seien.

Alkyl $R^1$ (allgemeine Formeln I und VI) enthält vorzugsweise 1 bis 12, insbesondere 1 bis 4 Kohlenstoffatome, wobei beispielhaft Methyl, Ethyl und n- und i-Propyl genannt seien.

Alkenyl und Alkinyl $R^1$ enthalten vorzugsweise 1 Doppel- bzw. Dreifachbindung und vorzugsweise 3 bis 4 Kohlenstoffatome, wobei Allyl und Propargyl als Beispiele genannt seien.

Cycloalkyl $R^1$ enthält bevorzugt 3 bis 7, insbesondere 5 oder 6 Kohlenstoffatome. Beispielhaft seien Cyclopentyl und Cyclohexyl aufgeführt.

Aryl $R^1$ bedeutet vorzugsweise Phenyl oder Naphthyl, insbesondere Phenyl.

Aralkyl $R^1$ enthält vorzugsweise 1 bis 3 Kohlenstoffatome im Alkylteil und 5 oder 10 Kohlenstoffatome im Arylteil, wobei beispielhaft Benzyl und Phenylethyl aufgeführt werden.

Heterocyclyl $R^1$ ist ein heterocyclischer Rest, dessen Ring 1 oder mehrere, vorzugsweise 1 bis 3, insbesondere 1 oder 2 gleiche oder verschiedene Heteroatome, wie Sauerstoff, Schwefel oder Stickstoff enthält und der aromatisch, ungesättigt oder gesättigt sein kann, und vorzugsweise 5 oder 6 Ringglieder enthält. Beispielhaft seien aufgeführt: Furyl, Thienyl, Tetrahydrofuryl, Pyranyl, Pyrrolyl, Imidazolyl und Pyridyl.

Alkyl $R^2$ und $R^3$ enthält vorzugsweise 1 bis 6, insbesondere 1 bis 4 Kohlenstoffatome, wobei beispielhaft Methyl, Ethyl und n- und i-Propyl aufgeführt seien.

Aryl $R^2$ und $R^3$ bedeutet vorzugsweise Phenyl.

Die heterocyclischen Reste $R^2$ und $R^3$ haben die bei Heterocyclyl $R^1$ angegebene Bedeutung. Darüber hinaus können $R^2$ und $R^3$ zusammen mit dem N-Atom, an welches sie gebunden sind, zu einem 5- oder 6-gliedrigen Ring verknüpft sein, der gegebenenfalls durch ein Heteroatom (wie Stickstoff, Sauerstoff oder Schwefel) unterbrochen ist.

Die in der Erfindung als gegebenenfalls substituiert angegebenen Reste können einen oder mehrere, vorzugsweise 1 bis 3, insbesondere 1 oder 2 gleiche oder verschiedene Substituenten tragen. Als Substituenten seien beispielhaft aufgeführt: Alkyl mit vorzugsweise 1 bis 4, insbesondere 1 oder 2 Kohlenstoffatomen, wie Methyl, Ethyl, n.- und i.-Propyl und n.-, i.- und t.-Butyl; Alkoxy mit vorzugsweise 1 bis 4, insbesondere 1 oder 2 Kohlenstoffatomen, wie Methoxy, Ethoxy, n.- und i. -Propyloxy und n.- i.- und t.-Butyloxy; Alkylthio mit vorzugsweise 1 bis 4, insbesondere 1 oder 2 Kohlenstoffatomen, wie Methylthio, Ethylthio, n.- und i. -Propylthio und n.- i.- und t.-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl oder Trichlormethyl; Hydroxy; Halogen, vorzugsweise Fluor, Chlor, Brom und Jod, insbesondere Chlor und Fluor; Cyano; Nitro; Amino; Monoalkyl- und Dialkylamino mit vorzugsweise 1 bis 4, insbesondere 1 oder 2 Kohlenstoffatomen je Alkylgruppe, wie Methylamino, Methyl-ethyl-amino, n.- und i.-Propylamino und Methyl-n.-Butylamino; Carboxyl; Carbalkoxy mit vorzugsweise 2 bis 4, insbesondere 2 oder 3 Kohlenstoffatomen, wie Carbomethoxy und Carboethoxy; Sulfo ($-SO_3H$); Alkylsulfonyl mit vorzugsweise 1 bis 4, insbesondere 1 oder 2 Kohlenstoffatomen, wie Methylsulfonyl

0192127

und Ethylsulfonyl; Arylsulfonyl mit vorzugsweise 6 oder 10 Arylkohlenstoffatomen, wie Phenylsulfonyl.

Ammonium M kann für das $NH_4^+$-Ion oder aber das Kation eines Mono-, Di- oder Trialkylamins mit vorzugsweise 1 bis 4, insbesondere 1 oder 2 Kohlenstoffatomen je Alkylgruppe stehen. Beispielhaft seien Ammonium, Methylammonium und Trimethylammonium genannt.

Als Alkali, Erdalkali- oder Schwermetallkationen M stehen vorzugsweise die Kationen von Natrium, Kalium, Calcium, Magnesium, Kupfer, Zink, Mangan, Nickel und Eisen, besonders bevorzugt von Kupfer und Zink.

Bevorzugt werden erfindungsgemäß Sulfensäureamide der allgemeinen Formel (I) eingesetzt, in welcher

X für Fluor und Chlor steht (wobei $X_3$ vorzugsweise für $Cl_2F$ oder $F_2Cl$ steht),

$Y^1$ für Wasserstoff, Halogen (vorzugsweise Chlor), $C_1$-$C_4$-Alkyl (vorzugsweise Methyl), $C_1$-$C_4$-Alkoxy (vorzugsweise Methoxy) oder $NO_2$ steht,

$Y^2$ für Wasserstoff oder Halogen (vorzugsweise Chlor) steht,

Z für Halogen (vorzugsweise Fluor), -OH, -NHOH, für die Gruppe $-OR^1$, in welcher $R^1$ gegebenenfalls durch Halogen (vorzugsweise Chlor), $C_1$-$C_4$-Alkoxy

(vorzugsweise Methoxy oder Ethoxy), $C_1$-$C_4$-Alkylthio (vorzugsweise $C_1$ oder $C_2$-Alkylthio), $C_1$-$C_4$-Alkoxy-$C_1$-$C_4$-Alkoxy (vorzugsweise Methoxyethoxy) oder CN substituiertes $C_1$-$C_{12}$-Alkyl (vorzugsweise $C_1$-$C_4$-Alkyl) bedeutet, oder $R^1$ $C_2$-$C_4$-Alkenyl (vorzugsweise Allyl) oder $C_3$-$C_4$-Alkinyl (vorzugsweise Propargyl) bedeutet, oder $R^1$ gegebenenfalls durch Halogen (vorzugsweise Chlor) oder $C_1$-$C_4$-Alkoxycarbonyl (vorzugsweise Methoxycarbonyl) substituiertes Phenyl bedeutet oder $R^1$ gegebenenfalls durch $C_1$-$C_4$-Alkyl und/oder $C_1$-$C_4$-Alkoxycarbonyl substituiertes Thienyl bedeutet oder $R^1$ für die Gruppe $-NR^2R^3$ steht, in welcher $R^2$ für Wasserstoff und $R^3$ für Wasserstoff oder gegebenenfalls durch Halogen (vorzugsweise Chlor), $C_1$-$C_4$-Alkoxy (vorzugsweise Methoxy) oder CN substituiertes $C_1$-$C_4$-Alkyl stehen oder $R^1$ für die Gruppe -OM steht, in welcher M Ammonium oder ein Äquivalent eines Alkalimetalles (vorzugsweise Natrium oder Kalium), eines Erdalkalimetalles (vorzugsweise Calcium oder Magnesium) oder eines Schwermetalles (vorzugsweise Kupfer oder Zink) bedeutet.

Weiterhin werden erfindungsgemäß bevorzugt die neuen Sulfensäureamide der allgemeinen Formel (I),

in welcher

X für Fluor und Chlor (vorzugsweise steht $X_3$ für $Cl_2F$) steht,

$Y^1$ für Wasserstoff, $C_1$-$C_4$-Alkyl (vorzugsweise Methyl), $C_1$-$C_4$-Alkoxy (vorzugsweise Methoxy) oder Chlor steht,

$Y^2$ für Wasserstoff steht, und

Z für die Gruppe $OR^1$ steht, in welcher $R^1$ $C_1$-$C_{12}$-Alkyl (vorzugsweise $C_1$-$C_4$-Alkyl) bedeutet, welches durch Halogen (vorzugsweise Chlor), $C_1$-$C_4$-Alkoxy (vorzugsweise Methoxy oder Ethoxy), $C_1$-$C_4$-Alkylthio (vorzugsweise Methylthio oder Ethylthio), $C_1$-$C_4$-Alkoxy-$C_1$-$C_4$-Alkoxy (vorzugsweise Methoxy-$C_1$-$C_2$-alkoxy) substituiert sein kann oder in welcher $R^1$ für Allyl oder Propargyl steht.

Besonders bevorzugt werden erfindungsgemäß die neuen Kupfer- und Zinksalze der Verbindungen der allgemeinen Formel (I), da sie aufgrund ihrer Löslichkeiten besonders günstig formuliert werden können.

Im folgenden werden einige Beispiele für erfindungsgemäß besonders vorteilhaft einsetzbare Verbindungen der allgemeinen Formel (I) aufgeführt:

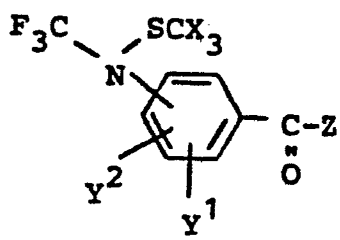

(I)

Tabelle 1

| Extender Nr. | $-N(CF_3)SCCX_3$ | $Y^1$ | $Y^2$ | Z |
|---|---|---|---|---|
| 1 | $4-N(CF_3)SCCl_2F$ | H | H | OH |
| 2 | 3- " | 4-Cl | H | OH |
| 3 | $3-N(CF_3)SCClF_2$ | H | H | OH |
| 4 | $4-N(CF_3)SCCl_2F$ | H | H | $O\frac{1}{2}\ Cu^{2+}$ |
| 5 | 4- " | H | H | $O\frac{1}{2}\ Zn^{2+}$ |
| 6 | $4-N(CF_3)SCCl_2F$ | $3-CH_3$ | H | OH |
| 7 | $4-N(CF_3)SCCl_2F$ | $3-CH_3$ | H | OH |
| 8 | $3-N(CF_3)SCCl_2F$ | $4-CH_3$ | H | OH |
| 9 | $3-N(CF_3)SCCl_2F$ | H | H | 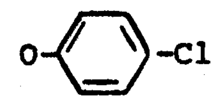 |
| 10 | $3-N(CF_3)SCCl_2F$ | $4-CH_3O$ | H | OH |
| 11 | 3- " | 6-Cl | H | OH |
| 12 | 3- " | H | H | OH |
| 13 | 3- " | H | H | -NHOH |
| 14 | 3- " | 4-Cl | $5-NO_2$ | OH |
| 15 | 3- " | 4-Cl | H | $OC_{12}H_{25}$ |
| 16 | 4- " | H | H | 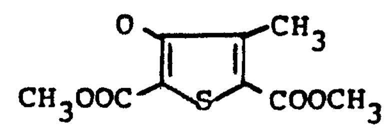 |

Tabelle 1 (Fortsetzung)

| Extender Nr. | $-N(CF_3)SCX_3$ | $Y^1$ | $Y^2$ | Z |
|---|---|---|---|---|
| 17 | $3-N(CF_3)SCCl_2F$ | 4-Cl | H | F |
| 18 | $3-N(CF_3)SCCl_2F$ | 4-Cl | H | $O\frac{1}{2}\ Cu^{2+}$ |
| 19 | 3- " | 4-Cl | H | $O\frac{1}{2}\ Zn^{2+}$ |
| 20 | 3- " | H | H | $OCH_2CH_2Cl$ |
| 21 | 3- " | H | H | $OCH_2CCl_3$ |
| 22 | 3- " | H | H | $OCH_2CH_2OCH_3$ |
| 23 | 3- " | H | H | $OCH_2C\equiv CH$ |
| 24 | 3- " | H | H | $OCH_2CH_2SC_2H_5$ |
| 25 | 4- " | H | H | $OCH_2CCl_3$ |
| 26 | 4- " | H | H | $O(CH_2)_{11}CH_3$ |
| 27 | 4- " | H | H | $OCH_2CH_2OCH_3$ |
| 28 | 4- " | H | H | $OCH_2CH=CH_2$ |
| 29 | 4- " | H | H | $OCH_2-C\equiv CH$ |
| 30 | 4- " | H | H | $NHCH_2CH_2CH_2OCH_3$ |
| 31 | 4- " | H | H | $OCH_2CH_2OCH_2CH_2OCH_3$ |
| 32 | 4- " | H | H | $N(CH_3)CH_2CH_2CN$ |
| 33 | 3- " | 4-Cl | H | $OCH_3$ |

Tabelle 1 (Fortsetzung)

| Extender Nr. | $-N(CF_3)SCX_3$ | $Y^1$ | $Y^2$ | Z |
|---|---|---|---|---|
| 34 | $3-N(CF_3)SCCl_2F$ | 4-Cl | H | $OC_3H_7i$ |
| 35 | $4-N(CF_3)SCCl_2F$ | H | H | 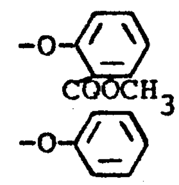 |
| 36 | 4- " | H | H | |
| 37 | 3- " | H | H | " |
| 38 | 4- " | H | H | 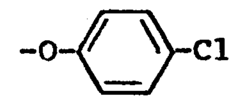 |
| 39 | 3- " | 6-Cl | H | O 1/2 $Zn^{2+}$ |

Besonders bevorzugt werden die Extender Nr. 2, 4, 5, 6, 13, 14, 19 und 25.

Die neuen Mischungen aus den Wirkstoffen und den Extendern können gegen eine Vielzahl von Nematoden und Insekten eingesetzt werden, wobei die typischen Bodenschädlinge den Schwerpunkt bilden, jedoch auch alle übrigen wichtigen Arthropoden erfaßt werden können, welche üblicherweise oder aber auch nur zeitweise rein zufällig im Boden oder in Bodennähe auftreten.

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.

Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Zu den pflanzenparasitären Nematoden gehören z.B. Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Besonders bevorzugt eingesetzt werden die neuen Schädlingsbekämpfungsmittel gegen die oben genannten Nematoden. Weiterhin werden sie bevorzugt eingesetzt gegen die Schädlinge aus der Gruppe der "corn rootworms" der Gattung Diabrotica, wie Diabrotica virgifera, Diabrotica balteata und Diabrotica longicornis.

Die Mischungen aus Wirkstoffen und Extender können in die üblichen Formulierungen übergeführt werden, wie Lösungen, Emulsionen, Suspensionen, Pulver, Granulate, Wirkstoff-imprägnierte Natur- und synthetische Stoffe, Feinstverkapselungen in polymeren Stoffen und in Hüllmassen für Saatgut.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte

Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit, Ziegelsteingrieß sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additve können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Bevorzugte Formulierungsformen sind die Granulate, emulgierbare Konzentrate, Suspensionskonzentrate und wasserdispergierbare Pulver.

Die Formulierungen enthalten im allgemeinen zwischen 0,1 und 95 Gewichtsprozent der Mischung aus Wirkstoff und Extender, vorzugsweise zwischen 0,5 und 90 %.

Es ist auch möglich, Wirkstoffe und Extender getrennt zu formulieren und die formulierten Produkte zu vermischen oder die formulierten Produkte in ihren Formulierungen getrennt zu applizieren.

Die erfindungsgemäßen Mischungen können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden oder wachstumsregulierenden Stoffen vorliegen. Zu den Insektiziden zählen beispielsweise Phosphorsäureester, Carbamate, Carbonsäureester, chlorierte Kohlenwasserstoffe, Phenylharnstoffe, Pyrethroide, durch Mikroorganismen hergestellte Stoffe u.a.

Die erfindungsgemäßen Mischungen können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Die Anwendung geschieht in einer den Anwendungsformen angepaßten üblichen Weise. Wie bereits oben angedeutet ist es auch möglich, Wirkstoffe und Extender in (gegebenenfalls unterschiedlichen) getrennten Formulierungen in Mischungen der Formulierungen oder als getrennte Formulierungen zu verwenden.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 20 Gew.-% liegen.

In den Formulierungen können die Anteile Wirkstoff zu Extender über breite Bereiche, je nach gewähltem Extender und der relativen Aktivität des jeweils verwendeten Wirkstoffes und dem Wirkstoffgehalt in der Formulierung, schwanken ohne, daß eine Wirkungsverlängerung verloren geht. Vorzugsweise liegen die Verhältnisse (Gewichtsverhältnisse) Wirkstoffe : Extender zwischen den Bereichen von 1:50 und 50:1, besonders bevorzugt zwischen 1:20 und 20:1 und ganz besonders bevorzugt zwischen 1:10 und 10:1.

Die neuen Mischungen aus Wirkstoffen und Extender werden vorzugsweise in Mengen zwischen 0,1 und 10 kg/ha, vorzugsweise zwischen 0,5 und 5 kg/ha und besonders bevorzugt zwischen 0,8 und 2 kg/ha (bezogen auf die unformulierten Stoffe) eingesetzt.

Dem Fachmann ist es leicht möglich, anhand seines Fachwissens oder mit Hilfe von einfachen orientierenden Versuchen die für die Lösung der jeweiligen Probleme günstigste Formulierungen, Zusammensetzungen und Aufwandmengen zu bestimmen.

Die Herstellung der neuen erfindungsgemäßen Sulfensäureamiden soll anhand der folgenden Beispiele erläutert werden:

I) Herstellung der Salze (Z bedeutet OM)

Beispiel I/1

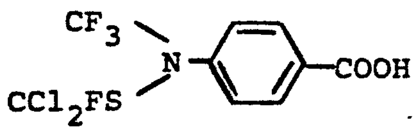

Zinksalz (OM = $O\frac{1}{2}\ Zn^{2+}$)

Zu einer Lösung aus 4,2 g (1/20 Mol) Natriumhydrogencarbonat in 50 ml Wasser gibt man eine Lösung von 17 g (1/20 Mol) 4-N-Trifluormethyl-N-(dichlorfluormethylthio)-aminobenzoesäure in 50 ml Methanol. An diese wäßrige-methanolische Lösung legt man zur Entfernung des gebildeten $CO_2$ kurzzeitig Vakuum an und tropft anschließend eine Lösung von 3,5 g (1/40 Mol) Zinkchlorid in 150 ml Wasser zu. Hierbei fällt das Zinksalz sofort aus. Man saugt und trocknet bei 70°. Ausbeute 18 g; Fp: 252-56°C.

In analoger Weise erhält man die folgenden Salze:

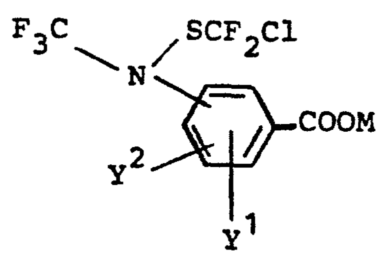

| Bsp.-Nr. | Stellung von $N(CF_3)SCF_2Cl$ | $Y^1$ | $Y^2$ | M | Fp (°C) |
|---|---|---|---|---|---|
| I/2 | 4 | H | H | 1/2 $Cu^{2+}$ | 260-262 |
| I/3 | 4 | H | H | 1/2 $Mg^{2+}$ | 110 |
| I/4 | 3 | H | | 1/2 $Zn^{2+}$ | 80 (Z) |
| I/5 | 3 | H | H | 1/2 $Cu^{2+}$ | 206 |
| I/6 | 2 | H | H | 1/2 $Zn^{2+}$ | 80 |
| I/7 | 3 | 4-Cl | H | 1/2 $Zn^{2+}$ | 175-178 |
| I/8 | 3 | 4-Cl | H | 1/2 $Cu^{2+}$ | 170 |

## II Herstellung der Ester (Z bedeutet $OR^1$)

### Beispiel II/1

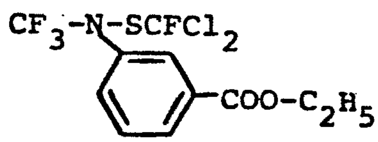

1060 g 3-N-(Fluordichlormethylthio)-N-(trifluormethyl)-aminobenzoylfluorid (3,1 Mol) und 145 g Ethanol (3,15 Mol) werden in 3 Liter Toluol gelöst und bei 20-30°C unter Kühlung mit 345 g Triethylamin (3,4 Mol) versetzt. Man rührt etwa 1 Stunde, wäscht das Reaktionsgut 3 mal mit je 1 Liter Wasser, trocknet über Natriumsulfat und destilliert das Lösungsmittel im Vakuum ab.

Der Rückstand (1275 g) wird anschließend im Vakuum destilliert. Man erhält 1058 g = 82 % der Theorie vom $Kp_{0,4}$ Torr 122-24°C.

Auf die gleiche Weise werden die Verbindungen der folgenden Beispiele erhalten:

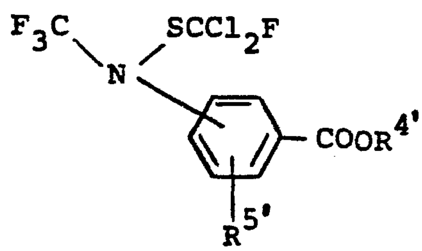

| Beispiel Nr. | Stellung von $N(CF_3)SCCl_2F$ | $R^{5'}$ | $R^{4'}$ | Kp(°C) Torr ($n_D^{20}$ ) |
|---|---|---|---|---|
| II/2 | 3 | H | $CH_3$ | 115°/0,3 |
| II/3 | 4 | H | $CH_3$ | 120°/0,3 |
| II/4 | 2 | H | $CH_3$ | 120°/0,3 |
| II/5 | 4 | H | $C_4H_9n$ | 125°/0,2 |
| II/6 | 3 | H | $C_4H_9n$ | 140°/0,3 |
| II/7 | 2 | H | $C_4H_9n$ | 170°/0,3 |
| II/8 | 2 | H | $CH_2CH_2Cl$ | 125°/0,1 |
| II/9 | 2 | H | $CH_2CCl_3$ | 138-40°/0,1 |
| II/10 | 2 | H | $C_{12}H_{25}$ | 179-80°/0,1 |
| II/11 | 2 | H | $CH_2CH_2OCH_3$ | 125-130°/0,1 |
| II/12 | 2 | H | $CH_2CH{=}CH_2$ | 110-12°/0,1 |
| II/13 | 2 | H | $CH_2C{\equiv}CH$ | 112-15°/0,1 |
| II/14 | 2 | H | $CH_2CH_2SC_2H_5$ | 145-50°/0,1 |
| II/15 | 2 | H | $C_{16}H_{31}$ | 215-20°/0,08 |
| II/16 | 2 | H | $CH_2CH_2OCH_2CH_2OCH_3$ | 160-63°/0,08 |
| II/17 | 3 | H | $CH_2CH_2Cl$ | 125-30°/0,08 |
| II/18 | 3 | H | $CH_2CCl_3$ | 140-45°/0,1 |
| II/19 | 3 | H | $C_{12}H_{25}$ | 185-90°/0,07 |
| II/20 | 3 | H | $CH_2CH_2OCH_3$ | 126-30°/0,1 |
| II/21 | 3 | H | $CH_2CH{=}CH_2$ | 120-25°/0,1 |
| II/22 | 3 | H | $CH_2C{\equiv}CH$ | 123-27°/0,1 |
| II/23 | 3 | H | $CH_2CH_2SC_2H_5$ | 150-53°/0,1 |
| II/24 | 3 | H | $CH_2CH_2OCH_3$ | (1,5164) |
| II/25 | 3 | H | $CH_2CH_2CH_2OCH_3$ | (1,5136) |
| II/26 | 3 | H | $CH_2CH_2OCH_2CH_2OCH_3$ | 154-60°/0,08 |
| II/27 | 4 | H | $CH_2CH_2Cl$ | 130-35°/0,1 |
| II/28 | 4 | H | $CH_2CCl_3$ | 140-45°/0,08 |
| II/29 | 4 | H | $C_{12}H_{25}$ | 195°/0,08 |

| Beispiel Nr. | Stellung von $N(CF_3)SCCl_2F$ | $R^5$ | $R^4$ | Kp(°C) Torr ($n_b^{20}$ ) |
|---|---|---|---|---|
| II/30 | 4 | H | $CH_2CH_2OCH_3$ | 130-35°/0,1 |
| II/31 | 4 | H | $CH_2CH{=}CH_2$ | 120-25°/0,1 |
| II/32 | 4 | H | $CH_2C{\equiv}CH$ | 125-30°/0,1 |
| II/33 | 4 | H | $CH_2CH_2OC_2H_5$ | 160-65°/0,12 |
| II/34 | 4 | H | $CH_2CH_2OCH_2CH_2OCH_3$ | 163-68°/0,08 |
| II/38 | 3 | 4-Cl | $C_2H_5$ | (1,5089) |
| II/36 | 3 | 4-Cl | $CH_3$ | (1,5153) |
| II/37 | 3 | 4-Cl | $C_3H_7i$ | (1,5031) |
| II/38 | 3 | 4-Cl | $C_{12}H_{25}$ | (1,4867) |

Die verlängerte Wirkungsdauer der neuen erfindungsgemäßen Mischungen soll durch die folgenden Beispiele erläutert werden.

Um beim Auffinden und Entwickeln geeigneter Extender unter Labor- und Gewächshausbedingungen schnell zu zweckmäßigen Ergebnissen zu kommen, wurden für die Untersuchungen geeignete Modellböden entwickelt und die Prüfungen bei relativ hohen Bodentemperaturen von 20-25°C durchgeführt.

Die in den Beispielen A und B eingesetzten Wirkstoffe können durch die folgenden Formeln erläutert werden:

1. Disulfoton: 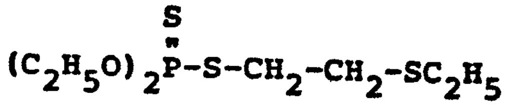

2. Fensulfothion: 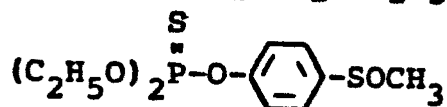

3. Terbufos: 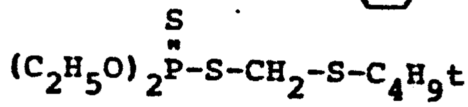

4. Fenophos: 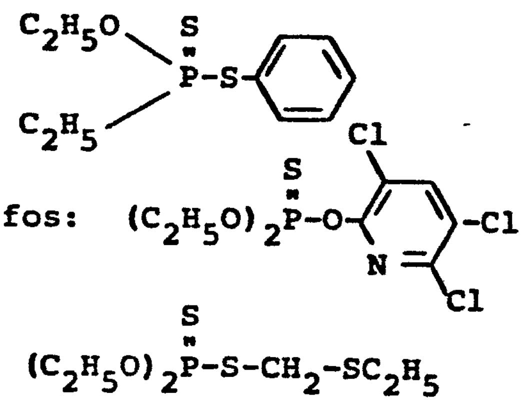

5. Chlorpyrifos:

6. Phorate:

7. Phoxim: 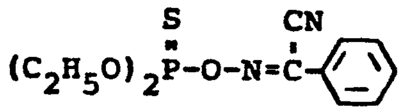

8. Carbofuran: 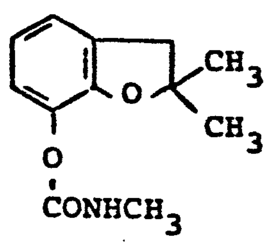

9. Isofenphos: 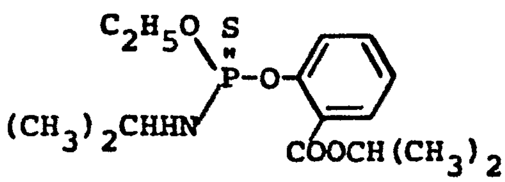

10. Fenamiphos: 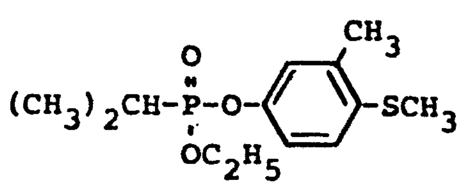

Beispiel A

1. Verwendeter Modellboden

Zusammensetzung (Gewichtsprozente):
60 % Gartenerde
30 % Sand
10 % Torf

2. Versuchsdurchführung und Ergebnisse

Für die Untersuchungen wurden jeweils 4 mg Wirkstoff allein oder eine Mischung aus jeweils 4 mg Wirkstoff und 4 mg der aufgeführten Extender mit jeweils 1 l des Modellbodens vermischt, so daß die einzelnen Stoffe jeweils in Konzentrationen von 4 ppm vorlagen. Nach Lagerung der so vorbehandelten Böden wurden 1/2 l Erde nach 1 Woche und der verbleibende halbe Liter nach 4 Wochen mit 20 7 Tage alten Larven von Diabrotica balteata besetzt. Am Tag dieses Besatzes wurden vorgequollene Getreidekörner auf den Boden jedes Gefäßes gebracht, so daß nach der Keimung in Pflänzchen, diese als Nahrung für die Larven dienten.

Jeweils 6 Tage nach dem Aufsetzen der Testlarven wurde durch Auszählen der toten und lebenden Larven der Wirkungsgrad des Wirkstoffes allein bzw. der Mischung aus Wirkstoff und Extender in % bestimmt. Der Wirkungsgrad ist 100 %, wenn alle Testlarven abgetötet worden sind, er ist 0 %, wenn noch genauso viele Testlarven leben wie in der unbehandelten Kontrolle.

Wirkstoff, Extender, Anwandmengen und Resultate gehen aus den nachfolgenden Tabellen hervor:

Beispiel A1 Wirkstoff: Carbofuran

| Wirkstoff Konzentration in ppm | Extender Nr.1 (vgl. Tabelle 1, oben) Konzentration in ppm | % Abtötung der Diabotica-Larven nach 1 Woche | 4 Wochen |
|---|---|---|---|
| Carbofuran: 4 | 0 | 100 | 0 |
| 10 | 0 | 100 | 0 |
| 0 | 10 | 0 | 0 |
| 0 | 30 | 0 | 0 |
| 4 | 4 | 100 | 100 |

Beispiel A2 Wirkstoff: Isophenphos

| Wirkstoff Konzentration in ppm | Jeweils Extender Nr. 1-38 (vgl. Tabelle 1, oben) Konzentration in ppm | % Abtötung der Diabrotica-Larven nach 1 Woche | 4 Wochen |
|---|---|---|---|
| Isophenphos: 4 | 0 | 100 | 0 |
| 10 | 0 | 100 | 0 |
| 0 | 10 | 0 | 0 |
| 4 | 4 | 100 | 100 |

Die Extender allein hatten bei den angewandten Konzentrationen keine abtötende Wirkung.

Die Versuche mit rein beispielhaften Konzentrationen zeigen, daß die Mischungen aus Wirkstoffen und Extender eine erheblich längere Wirkung haben als die Wirkstoffe allein.

Beispiel B

1. Verwendeter Modellboden

Zusammensetzung (Gewichtsprozent):
90 % Sandboden
10 % Torf

2. Versuchsdurchführung und Ergebnisse

Für die Untersuchungen wurden jeweils 4 mg Wirkstoff allein oder eine Mischung aus jeweils 4 mg Wirkstoff und 10 mg der aufgeführten Extender mit jeweils 1 l des Modellbodens vermischt, so daß die einzelnen Stoffe jeweils in Konzentrationen von 4 bzw. 10 ppm vorlagen. Nach Lagerung der so vorbehandelten Böden wurden 1/2 l Erde nach 1 Woche und der verbleibende halbe Liter nach 4 Wochen mit 10 7 Tage alten Larven von Diabrotica balteata besetzt. Am Tag dieses Besatzes wurden vorgequollene Getreidekörner auf den Boden jedes Gefäßes gebracht, so daß nach der Keimung in Pflänzchen, diese als Nahrung für die Larven dienten.

Jeweils 6 Tage nach dem Aufsetzen der Testlarven wurde durch Auszählen der toten und lebenden Larven der Wirkungsgrad des Wirkstoffes allein bzw. der Mischung aus Wirkstoff und Extender in % bestimmt. Der Wirkungsgrad ist 100 %, wenn alle Testlarven abgetötet worden sind, er ist 0 %, wenn noch genau so viel Testlarven leben wie in der unbehandelten Kontrolle.

Wirkstoff, Extender, Aufwandmengen und Resultate gehen aus den nachfolgenden Tabellen hervor:

In Beispiel B eingesetzte Wirkstoffe:

1. Disulfoton
2. Fensulfothion
3. Terbufos
4. Fenophos
5. Chlorpyrifos
6. Phorate
7. Phoxim
8. Carbofuran
9. Isofenphos

| Jeweils Wirkstoffe 1-9 Konzentration in ppm | Extender Nr.1-38 (vgl. Tabelle 1, oben) Konzentration in ppm | % Abtötung der Diabotica-Larven nach | |
|---|---|---|---|
| | | 1 Woche | 4 Wochen |
| 4 | 0 | 100 | 0 |
| 4 | 10 | 100 | 100 |

Die Versuche mit rein beispielhaften Konzentrationen zeigen, daß die Mischungen aus Wirkstoffen und Extender eine erheblich längere Wirkung haben als die Wirkstoffe allein.

Beispiel C

Modellboden und Versuchsdurchführung entsprechen Beispiel A. Als Testtiere werden jedoch Musca domestica-Maden eingesetzt und die Auswertungen erfolgten nach 2 und 6 Wochen. Als Wirkstoff diente Fenamiphos (Wirkstoff 10).

| Wirkstoff Konzentration in ppm | Extruder Nr. (vgl. Tabelle 1, oben) Konzentration in ppm | % Abtötung der Diabrotica Larven nach 2 Wochen | 6 Wochen |
|---|---|---|---|
| Wirkstoff 10: 4 | 0 | 100 | 0 |
| " " | Extruder Nr. 1: 4 | 100 | 100 |

Die Beschreibung und die Beispiele sind erläuternd und für die vorliegende Erfindung nicht beschränkend zu verstehen und weitere Ausführungsformen im Wesen und Umfang der Erfindung bieten sich dem Fachmann an.

Patentansprüche

1. Verwendung von Sulfensäureamiden der allgemeinen Formel (I)

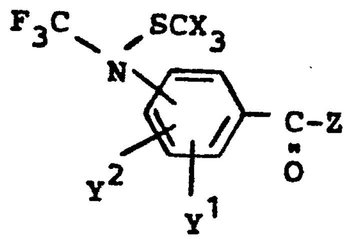

(I)

in welcher

X für gleiches oder verschiedenes Halogen steht,

$Y^1$ und $Y^2$ gleich oder verschieden sind und für Wasserstoff, Halogen, Alkyl, Alkoxy, Halogenalkyl oder $NO_2$ steht und

Z für Halogen, -OH, -NHOH, für die Gruppe $-OR^1$, in welcher $R^1$ gegebenenfalls substituierte Reste aus der Reihe Alkyl, Alkenyl, Alkinyl, Cycloalkyl, Aryl, Aralkyl oder Heterocyclyl bedeutet oder für die Gruppe 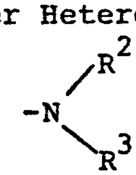 ,

in welcher

$R^2$ und $R^3$ gleich oder verschieden sind und Wasserstoff oder gegebenenfalls substituierte Reste aus der Reihe Alkyl, Aryl oder einen heterocyclischen Rest bedeuten oder für die Gruppe -OM, in welcher M Ammonium oder das Äquivalent eines Alkali-, Erdalkali- oder Schwermetall-Kations bedeutet, steht,

zur Verlängerung der Dauer einer hohen Wirksamkeit von Bodenschädlingsbekämpfungsmitteln aus der Reihe der Carbamate, P-Ester (Phosphor- und Phosphonsäureester einschließlich der Esteramide und der Thiono-, Thiol- und Thiono-thiol-Derivate) und Pyrethroide.

2. Verwendung von Sulfensäureamiden gemäß Anspruch 1, wobei die Bodenschädlingsbekämpfungsmittel P-Ester oder Carbamate sind.

3. Verwendung von Sulfensäureamiden der allgemeinen Formel (I) gemäß Anspruch 1 oder 2, wobei in der allgemeinen Formel (I)

X für Fluor und Chlor steht,

$Y^1$ für Wasserstoff, Halogen, $C_1$-$C_4$-Alkyl, $C_1$-$C_4$-Alkoxy oder $NO_2$ steht,

$Y^2$ für Wasserstoff oder Halogen steht,

Z für Halogen, -OH, -NHOH, für die Gruppe $-OR^1$ steht, in welcher $R^1$ gegebenenfalls durch Halogen, $C_1$-$C_4$-Alkoxy, $C_1$-$C_4$-Alkylthio, $C_1$-$C_4$-Alkoxy-$C_1$-$C_4$-Alkoxy oder CN substituiertes $C_1$-$C_{12}$-Alkyl bedeutet, oder $R^1$ $C_2$-$C_4$-Alkenyl oder $C_3$-$C_4$-Alkinyl bedeutet oder $R^1$ gegebenenfalls durch Halogen oder $C_1$-$C_4$-Alkoxycarbonyl substituiertes Phenyl bedeutet oder $R^1$ gegebenenfalls

durch $C_1$-$C_4$-Alkyl und/oder $C_1$-$C_4$-Alkoxycarbonyl substituiertes Thienyl bedeutet oder $R^1$ für die Gruppe $-NR^2R^3$ steht, in welcher $R^2$ für Wasserstoff und $R^3$ für Wasserstoff oder gegebenenfalls durch Halogen, $C_1$-$C_4$-Alkoxy oder CN substituiertes $C_1$-$C_4$-Alkyl stehen oder $R^1$ für die Gruppe -OM steht, in welcher M Ammonium oder ein Äquivalent eines Alkalimetalles eines Erdalkalimetalles oder eines Schwermetalles bedeutet.

4. Schädlingsbekämpfungsmittel, gekennzeichnet durch einen Gehalt an wenigstens einem Sulfensäureamid der allgemeinen Formel (I) gemäß Anspruch 1 und wenigstens einem Bodenschädlingsbekämpfungsmittel aus der Reihe der Carbamate, P-Ester (Phosphor- und Phosphonsäureester, einschließlich der Esteramide und der Thiono-, Thiol- und Thiono-thiol-Derivate) und Pyrethroide.

5. Schädlingsbekämpfungsmittel gemäß Anspruch 4, dadurch gekennzeichnet, daß es als Bodenschädlingsbekämpfungsmittel, einen P-Ester oder ein Carbamat enthält.

6. Mischungen, welche wenigstens ein Sulfensäureamid der allgemeinen Formel (I) gemäß Anspruch 1 und wenigstens ein Bodenschädlingsbekämpfungsmittel aus der Reihe der Carbamate, P-Ester und Pyrethroide enthält.

0192127

7. Verwendung der Schädlingsbekämpfungsmittel und der Mischungen gemäß den Ansprüchen 5 und 6 zur Bekämpfung von Bodenschädlingen.

8. Verbindungen der allgemeinen Formel (I) gemäß Anspruch 1, in welchen Z für die Gruppe -OM steht, in welcher M Ammonium oder das Äquivalent eines Alkali-, Erdalkali- oder Schwermetall-Kations bedeutet.

9. Verbindungen der allgemeinen Formel (I) gemäß Anspruch 1,

   in welcher

   X für gleiches oder verschiedenes Halogen steht,

   $Y^1$ und $Y^2$ gleich oder verschieden sind und für Wasserstoff, Halogen, Alkyl, Alkoxy, Halogenalkyl oder $NO_2$ steht, und

   Z für die Gruppe $-OR^1$ steht, in welcher $R^1$ gegebenenfalls durch Halogen, Cyano, Alkoxy, Alkylthio oder Alkoxyalkoxy substituiertes Alkyl, Alkenyl oder Alkinyl bedeutet.

10. Verfahren zur Herstellung der Sulfensäureamide der allgemeinen Formel (I)

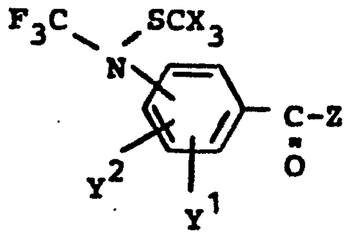

in welcher

X für gleiches oder verschiedenes Halogen steht,

$Y^1$ und $Y^2$ gleich oder verschieden sind und für Wasserstoff, Halogen, Alkyl, Alkoxy oder Halogenalkyl oder $NO_2$ steht, und

Z für die Gruppe $-OR^1$ steht, in welcher $R^1$ gegebenenfalls durch Halogen, Cyano, Alkoxy, Alkylthio oder Alkoxyalkoxy substituiertes Alkyl, Alkenyl oder Alkinyl bedeutet,

dadurch gekennzeichnet, daß man die Verbindungen der allgemeinen Formel (II)

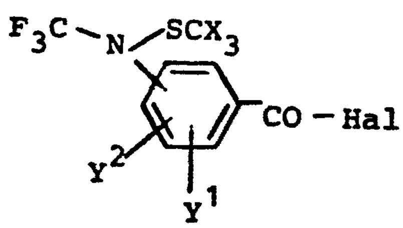

(II)

in welcher

X, $Y^1$ und $Y^2$ die oben angegebene Bedeutung haben und

Hal für Halogen (vorzugsweise Fluor oder Chlor) steht,

mit Verbindungen der allgemeinen Formel (III)

$$R^1 - OH \qquad (III)$$

in welcher

$R^1$ die oben angegebene Bedeutung hat,

in Gegenwart eines Säurebindemittels und in Gegenwart eines Lösungsmittels umsetzt.

11. Verfahren zur Herstellung der Sulfensäureamide der allgemeinen Formel (I)

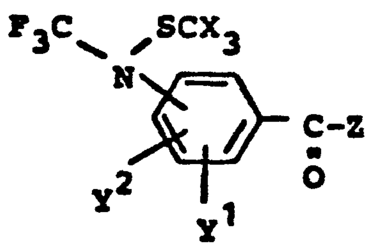

(I)

in welcher

X für gleiches oder verschiedenes Halogen steht,

$Y^1$ und $Y^2$ gleich oder verschieden sind und für Wasserstoff, Halogen, Alkyl, Alkoxy, Halogenalkyl oder $NO_2$ steht und

Z für die Gruppe $-OR^1$ steht, in welcher $R^1$ für die Gruppe -OM steht, in welcher M Ammonium oder das Äquivalent eines Alkali-, Erdalkali- oder Schwermetall-Kations bedeutet,

dadurch gekennzeichnet, daß man die Verbindungen der allgemeinen Formel (I), in welcher Z für OH steht, mit Ammoniak, Aminen oder Metallbasen umsetzt.